# EUROPEAN PATENT APPLICATION

(11) **EP 4 763 763 A1**
(43) Date of publication of application: **24.06.2026**
(21) Application number: 25224312.6
(22) Date of filing: 17.12.2025
(51) Int. Cl.: B65G 57/06, B65G 57/11, H01M 10/04, B65G 49/06

(54) **APPARATUS FOR STACKING BATTERY PLATES**

(30) Priority: 23.12.2024 GB 202418991
(71) Applicant: TBS Engineering Limited, Brockworth, Gloucester GL3 4AQ (GB)
(72) Inventor: SHARPE, Steve, Brockworth, Gloucester GL34AQ (GB)
(74) Representative: Wynne-Jones IP Limited

(57) **Abstract**

According to the invention there is provided an apparatus for stacking battery plates comprising:
a first battery plate holding stage;
a delivery conveyor system for delivering battery plates sequentially to the first battery plate holding stage;
a second battery plate holding stage disposed beneath the first battery plate holding stage; and
a removal conveyor system for removing stacks of battery plates from the apparatus;
in which:
the first battery plate holding stage comprises a plurality of moveable elements which are moveable between a first position in which the elements form a stage to support a battery plate delivered by the delivery conveyor system to a second position which allows the battery plate to fall under gravity onto the second holding stage; and
the second holding stage comprises a stage for holding a stack of battery plates received from the first holding stage; wherein the second holding stage is moveable between a first position in which battery plates are received from the first holding stage and a second position which allows the stack of battery plates to be removed by the removal conveyor system.

## Description

### Field of the Invention

The present invention relates to an apparatus for stacking battery plates.

### Background of the Invention

The term "battery" is used herein to include accumulators. In the manufacture of lead acid and similar batteries, battery plates are assembled into stacks or groups for insertion into a compartment of a battery box. Generally in such a stack, separators are provided between plates, or alternate plates are enveloped in a porous material in order to separate adjacent plates in the battery box.

Battery plates generally have a pasted plate construction and are brittle and porous. This means that particular care has to be taken when handling battery plates to avoid breakage and damage.

One known apparatus for stacking battery plates uses a Ferris wheel-type arrangement, having a plurality of carriers for transporting plates. A delivery conveyor feeds plates or pairs of plates into carriers at a first location. Once the plate or pair of plates is located on a carrier the Ferris wheel then rotates to transport the plates to a position where a stack of plates can be accumulated, and to position a subsequent carrier to receive the next plate(s). This type of machine has a typical maximum operating speed of less than 130 plates per minute. Other machines used in the manufacture of battery plates have been developed such that they can generally be operated at a higher output than known battery plate stackers, such as the Ferris wheel type. This means that the battery stacker machine becomes a bottleneck in the production and assembly line, effectively limiting the output of the whole production and assembly line to that of the battery stacker. Attempts have been made to increase the operating speed of existing battery stacking apparatus. However, it has not been possible to achieve the desired operating speeds. A possible solution to the problem of how to increase output would be to provide two of the known battery stacking machine operating in series. However, this increases the complexity and cost of the apparatus. **In** some known stacking arrangements, battery plates are supported and released directly from conveyor-mounted carriers or guides.

Such arrangements can limit flexibility in release timing and can complicate high-speed operation, particularly where controlled release under gravity is desired.

Embodiments of the invention seek to provide an apparatus which overcome some or all of these problems.

### Summary of Invention

According to a first aspect of the invention there is provided an apparatus for stacking battery plates comprising:
a first battery plate holding stage;
a delivery conveyor system for delivering battery plates sequentially to the first battery plate holding stage;
a second battery plate holding stage disposed beneath the first battery plate holding stage; and
a removal conveyor system for removing stacks of battery plates from the apparatus;
in which:
   the first battery plate holding stage comprises a plurality of moveable elements which are moveable between a first position in which the elements form a stage to support a battery plate delivered by the delivery conveyor system to a second position which allows the battery plate to fall under gravity onto the second holding stage; and
   the second holding stage comprises a stage for holding a stack of battery plates received from the first holding stage; wherein the second holding stage is moveable between a first position in which battery plates are received from the first holding stage and a second position which allows the stack of battery plates to be removed by the removal conveyor system.
   As used herein, the expression "fall under gravity" refers to a release of the battery plate from support by the first holding stage such that the battery plate undergoes an unsupported downward movement due to gravitational force, rather than being pushed, slid, guided, or transferred by a further mechanical element.
   **In** embodiments of the invention, release of the battery plate from the first battery plate holding stage is achieved by movement of the moveable elements that form the first holding stage itself between the first and second positions, rather than by operation of a separate stop, pusher, guide element acting to transfer the battery plate to the holding stage.
   The elements of the first holding stage can be rotated between the first and second positions. This is a highly convenient way of releasing battery plates from the first battery plate holding stage. A rotation of about 90 degrees can be sufficient, which assists in increasing processing speed. The elements might alternatively be reciprocated. In particularly advantageous embodiments, the moveable elements of the first holding stage are rotatable between the first and second positions through an angle of about 90 degrees, which provides a rapid and well-defined release of the battery plate under gravity.

The elements of the first holding stage can comprise a pair of spaced apart, opposed ledges. The elements can each be each provided as a cross arrangement having four equally radially spaced ledges with adjacent ledges being radially spaced by 90 degrees. Alternatively, fewer ledges might be provided. It is possible for an element to have a single ledge. **In** this case, each ledge can be flipped between its first and second positions.

The stage of the second holding stage can comprise a pair of spaced apart, opposed wall structures. The wall structures can each have a plurality of upper surfaces which support a battery plate. The wall structures can each comprise one or more grooves or cut-outs that define a plurality of upper land portions which comprise the upper surfaces.

**In** embodiments of the invention, the delivery conveyor system is configured to transfer or drop each battery plate onto the first battery plate holding stage, such that the delivery conveyor system does not itself form part of the first battery plate holding stage and does not support the battery plate during release onto the second battery plate holding stage.

The delivery conveyor system can deliver the battery plates by dropping them onto the first battery plate holding stage.

The apparatus can further comprise a third battery plate holding stage disposed beneath the first battery plate holding stage. The third battery plate holding stage can comprise a plurality of moveable elements which are moveable between a first, retracted position and a second, extended position in which the elements form a stage to support a battery plate received from the first holding stage. The movement of the second and third holding stages can be coordinated so that the elements of the third battery plate holding stage are in the second, extended position when the second holding stage is being moved from the first to the second position. It is a potential problem that the time taken to move the second battery plate holding stage from the first position to the second position (to discharge the battery plate stack to the removal conveyor system) is significantly longer than the time taken to deliver a battery plate from the delivery conveyor system to the second battery plate holding stage via the first battery plate holding stage. In practice, at least three battery plates can be delivered in this period. By providing the third battery plate holding stage, it is possible to accumulate battery plates from the first battery plate holding stage at least during the period when the second battery plate holding stage is moving to the second position and preferably also during the period when the second battery plate holding stage is moving back to the first position. At a desired point after the second battery plate holding stage reaches its second position, the accumulated battery plates can be transferred to the second battery plate holding stage and the elements of the third battery plate holding stage can be moved to the first, retracted position. In this way, there is no appreciable reduction in processing speed while a stack of battery plates is being unloaded. In principle, the elements of the third battery plate holding stage might be moved to the retracted position to allow the accumulated battery plates to fall under gravity on to the second battery plate holding stage. However, this is less preferred because of the kinetic energy imparted by falling under gravity. Advantageously, the second and third holding stages are configured so that, as the second holding stage moves upwards towards its first position, the stage of the second holding stage engages the accumulated battery plates thereby transferring the accumulated battery plates to the second battery plate holding stage. The stage of the second holding stage can be disposed inwardly of the moveable elements of the third holding stage so that the second holding stage can move upwards towards its first position without contacting the moveable elements of the third holding stage.

The elements of the third holding stage comprise a first set of one or more protruding elements and an opposed second set of one or more protruding elements. The protruding elements can be any suitable size and shape. For example, the protruding elements can be cylindrical or flat. The protruding elements can be stubs.

The apparatus can further comprise a reject mechanism for rejecting a defective battery plate. The reject mechanism can comprise: an intercept holding stage which comprises a plurality of moveable elements which are moveable between a first, retracted position which allows battery plates to fall under gravity onto the second holding stage and a second, extended position in which the elements form a stage to intercept a battery plate falling from the first holding stage that has been identified as a reject. The reject mechanism can comprise a removal element which ejects the rejected battery plate from the intercept holding stage to a reject zone.

The removal element can be a reciprocable member that can be extended from a rest position to eject a rejected battery plate and retracted back to the rest position. The reciprocable member can comprise a cylindrical member.

The elements of the intercept holding stage can comprise a pair of spaced apart, opposed bars.

When the third battery plate holding stage and the intercept holding stage are present, the apparatus can operate more efficiently if the intercept holding stage is disposed above the third battery plate holding stage.

The second holding stage can comprise a lift mechanism which moves the second holding stage between the first and second positions. The first position is an upper position underneath the first holding stage and the second position is a lower position aligned with the removal conveyor system.

The apparatus can further comprise a plurality of actuators for causing the movement of the moveable elements and the second holding stage. The apparatus can further comprise at least one actuator for causing the movement of the removal element. The actuators can comprise servomotors or pneumatic actuators.

The apparatus can further comprise a controller configured to control the operation of the apparatus including the movement of the moveable elements and the second holding stage. The controller can comprise a suitable microprocessor based control system.

The apparatus can further comprise sensors or other detectors for detecting the presence of a defective battery plate, the height or number of battery plates in a stack on the second holding stage or other conditions of the system. The output of such sensors or other detectors can be used to trigger or affect the operation of the controller. Sensors might also be located elsewhere in the process line, particularly for detecting defective battery plates.

According to a second aspect of the invention there is provided a method for stacking battery plates comprising the steps of:
- providing an apparatus according to the first aspect of the invention;
- delivering a battery plate to a first battery plate holding stage using a delivery conveyor system, the first holding stage comprising a plurality of moveable elements which are in a first position wherein the elements form a stage which supports the battery plate;
- moving the moveable elements of the first holding stage to a second position which allows the battery plate to fall under gravity onto a second holding stage, wherein the second holding stage is in a first position which allows battery plates to be received from the first holding stage;
- repeating the steps of delivering a battery plate and moving the moveable elements to provide a stack of battery plates on the second holding stage;
- moving the second holding stage from the first position to a second position which allows the stack of battery plates to be removed by a removal conveyor system.

The movement of the second and third holding stages can be coordinated so that the elements of the third battery plate holding stage are in the second, extended position when the second holding stage is being moved between the first and second positions.

The method can comprise the further step of rejecting a defective battery plate by identifying a battery plate as a reject, moving the plurality of movable elements of the intercept holding stage to the second position wherein the elements form a stage to intercept the reject battery plate falling from the first holding stage, and using the removal element to eject the rejected battery plate from the third holding stage to a reject zone.

According to a third aspect of the invention there is provided a battery manufacturing apparatus comprising an apparatus for stacking batteries according to the first aspect of the invention.

Whilst the invention has been described above, it extends to any inventive combination of the features set out above, or in the following description, drawings or claims. Any features disclosed in relation to one aspect of the invention may be combined with any features disclosed in relation to another aspect of the invention as appropriate.

### Description of the Drawings

Embodiments of the invention will now be described, by way of example only, with reference to the accompanying drawings, in which:
Figure 1 is a perspective view of an apparatus of the invention during operation;
Figure 2 is a front view of an apparatus of the invention during operation;
Figure 3 is a perspective view of an apparatus of the invention during unloading of a stack;
Figure 4 is a front view of an apparatus of the invention during unloading of a stack;
Figure 5 is a perspective view of an apparatus of the invention during rejection of a defective battery plate; and
Figure 6 is a front view of an apparatus of the invention during rejection of a defective battery plate.

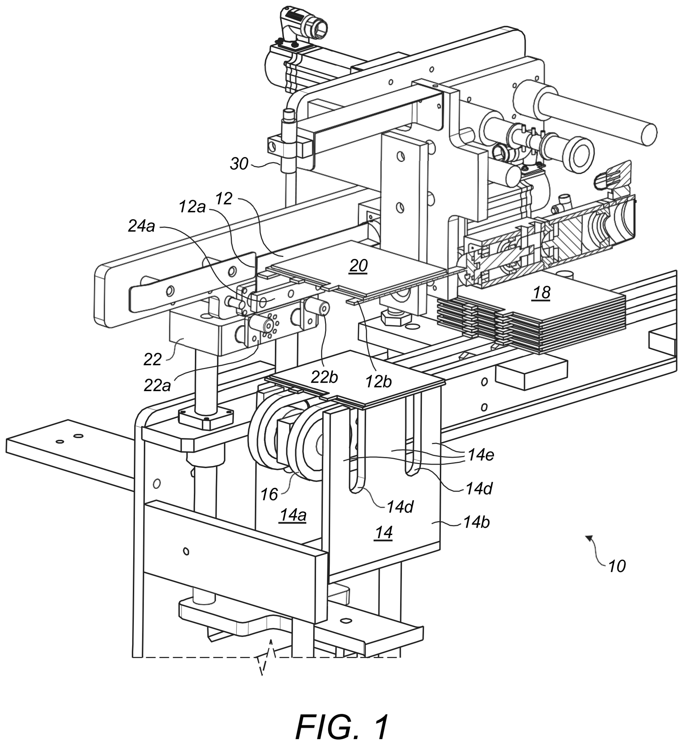

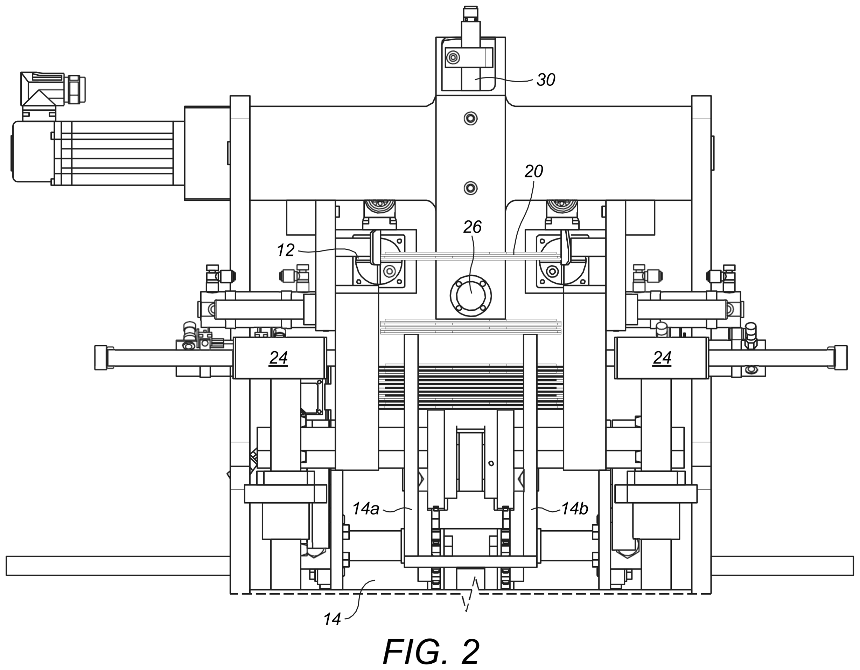

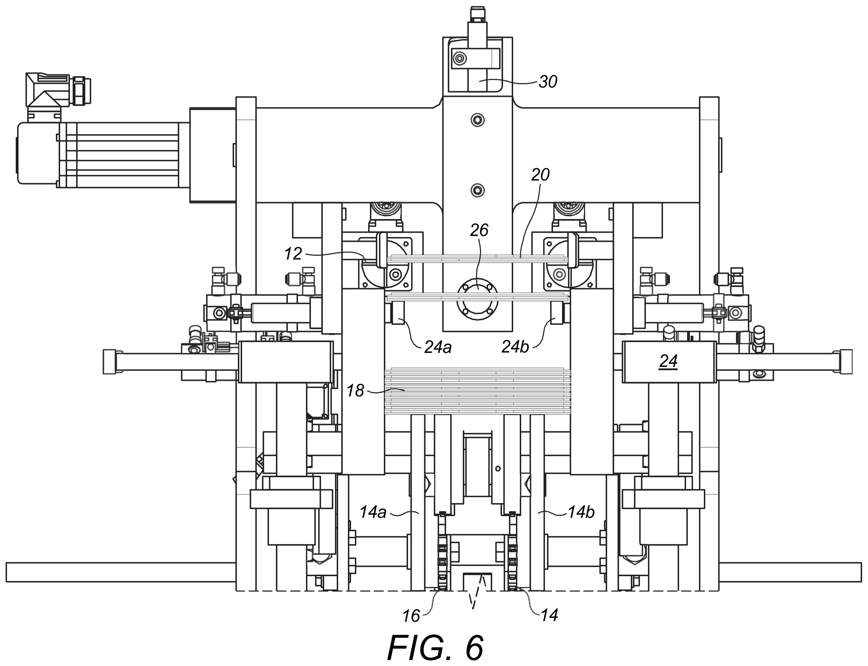

The Figures show an apparatus of the invention, depicted generally at 10. The apparatus 10 comprises a first battery plate holding stage 12, a delivery conveyor system (not shown) for delivering battery plates sequentially to the first battery plate holding stage 12, a second battery plate holding stage 14 disposed beneath the first battery plate holding stage 12 and a removal conveyor system 16 for removing stacks of battery plates 18 from the apparatus. The first battery plate holding stage 12 comprises a plurality of moveable elements 12a, 12b which are moveable between a first position in which the elements form a stage to support a battery plate delivered by the delivery conveyor system to a second position which allows the battery plate to fall under gravity onto the second holding stage 14. All of the Figures 1 to 6 show the moveable elements 12a, 12b in the first position. In the embodiment shown in the Figures, the moveable elements 12a, 12b comprise a pair of spaced apart, opposed ledges which are conveniently rotated between the first and second positions. The rotation can be conveniently achieved using servo driven rotary actuators. Figure 2 shows a battery plate pair 20 positioned on the opposed ledges 12a, 12b. Rotation of the opposed ledges by 90 degrees or slightly more (clockwise in the case of ledge 12a and anticlockwise in the case of ledge 12b) is sufficient to place the ledges in their second position which allows the battery plate pair 20 to fall under gravity onto the second holding stage 14.

The second holding stage 14 comprises a stage 14a, 14b for holding a stack of battery plates 18 received from the first holding stage 12. The second holding stage 14 is moveable between a first position in which battery plate pairs 20 are received from the first holding stage 12 and a second position which allows the stack of battery plates 18 to be removed by the removal conveyor system 16. Figure 2 shows the second holding stage 14 in its first position. Figures 1, 3 and 4 show the second holding stage 14 in its second, lowered position. The stage 14a, 14b of the second holding stage 14 comprises a pair of spaced apart, opposed wall structures 14a, 14b. The wall structures 14a, 14b each have a plurality of upper surfaces 14c which can support a battery plate pair. The wall structures 14a, 14b each comprise two downwardly depending grooves 14d that define a plurality of upper land portions 14e which comprise the upper surfaces 14c. The second holding stage 14 comprises an actuator driven lift mechanism (not shown) which moves the second holding stage between the first and second positions, wherein the first position is an upper position underneath the first holding stage 12 and the second position is a lower position aligned with the removal conveyor system 16.

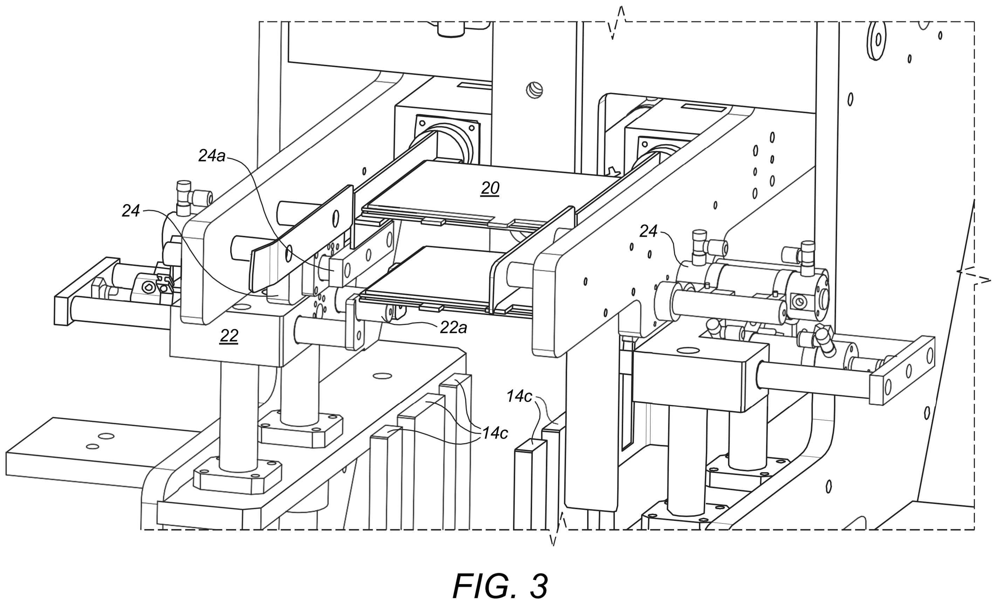

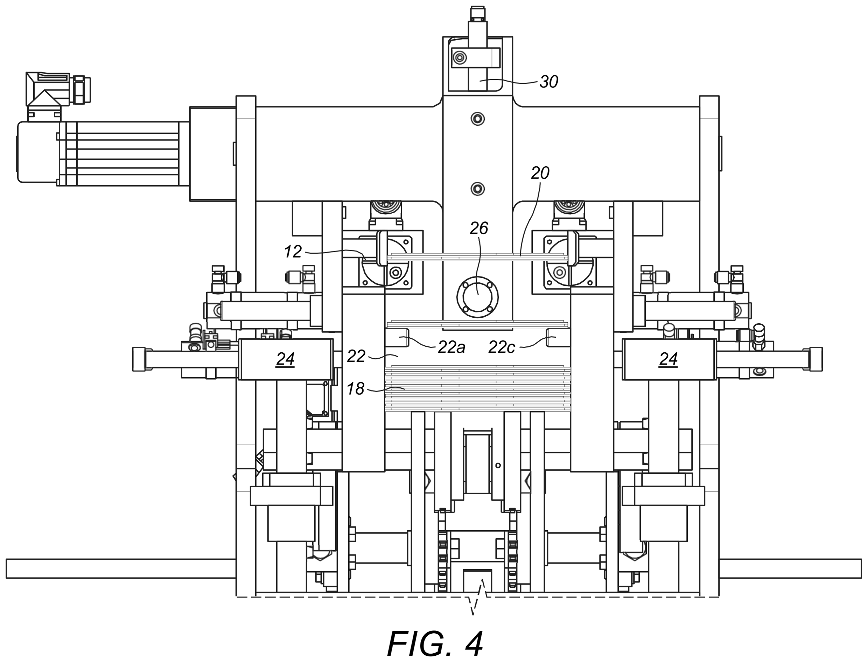

The apparatus 10 shown in the Figures comprises two further advantageous features which solve significant problems encountered by the present inventors. The first of these further features is a third battery plate holding stage 22 disposed beneath the first battery plate holding stage 12. The third battery plate holding stage 22 comprises a plurality of moveable elements 22a, 22b, 22c, 22d which are moveable between a first, retracted position and a second, extended position in which the elements form a stage to support a battery plate pair 20 received from the first holding stage 12. The moveable elements can be provided as a first pair of protruding elements 22a, 22b and an opposed pair of protruding elements 22c, 22d which can be any suitable size and shape, for example, as relatively short cylindrical stubs or prongs. Figure 2 shows the apparatus 10 with the moveable elements of the third battery plate holding stage 22 in their first position. Figures 3 and 4 show the moveable elements of the third battery plate holding stage 22 in their second position. Pneumatic actuation has proved highly effective although other means for moving the moveable elements 22a, 22b, 22c, 22d are possible.

The movement of the second 14 and third 22 holding stages can be coordinated so that the moveable elements 22a, 22b, 22c, 22d of the third battery plate holding stage 22 are in the second, extended position when the second holding stage 14 is being moved from the first to the second position. This solves an otherwise significant problem, which is that the time taken to move the second battery plate holding stage 14 from the first position to the second position (to discharge the battery plate stack to the removal conveyor system) during intended operation is significantly longer than the time taken to deliver a battery plate from the delivery conveyor system to the second battery plate holding stage 14 via the first battery plate holding stage 12. In practice, at least three battery plates can be delivered under typical operating conditions. By providing the third battery plate holding stage 22, it is possible to accumulate battery plate pairs from the first battery plate holding stage 12 during the period when the second battery plate holding stage 14 is moving to and from the second position. In this way, there is no appreciable reduction in processing speed while a stack of battery plate pairs is being unloaded.

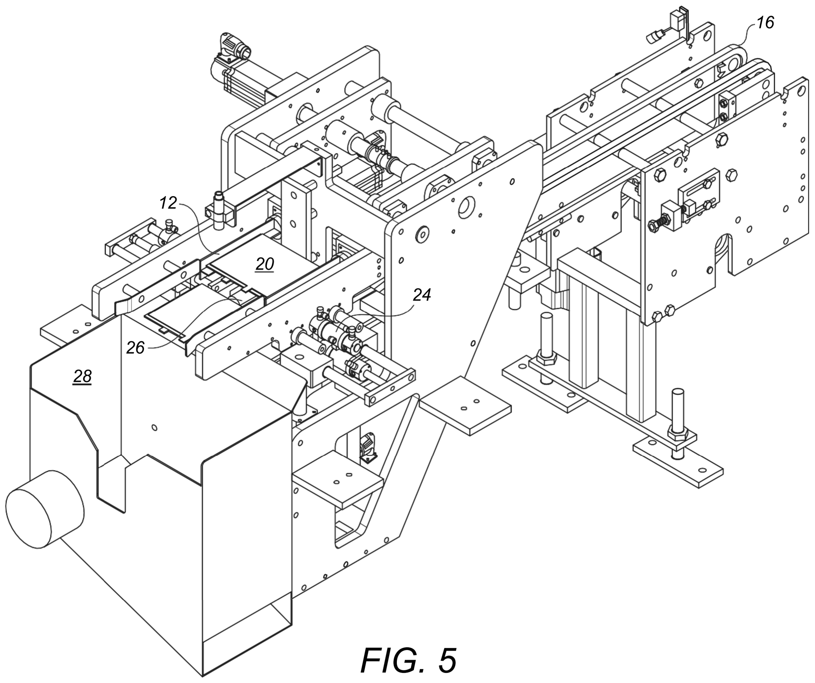

The second of the further advantageous features is a reject mechanism for rejecting a defective battery plate pair. The reject mechanism comprises an intercept holding stage 24 which comprises a plurality of moveable elements 24a, 24b which are moveable between a first, retracted position which allows battery plates to fall under gravity onto the second holding stage 14 and a second, extended position in which the elements 24a, 24b form a stage to intercept a battery plate pair falling from the first holding stage 12 that has been identified as a reject. The elements 24a, 24b can be in the form of a pair of spaced apart, opposed bars or any other suitable shape and configuration. The reject mechanism further comprises a removal element 26 which ejects the rejected battery plate from the intercept holding stage 24 to a reject zone 28. The removal element 26 is a reciprocable member that can be extended at high speed from a rest position to eject a rejected battery plate pair and retracted back to the rest position. As shown in the Figures, the reciprocable member can be a cyclindrical member. A suitable linear actuator can be used to provide the reciprocating motion. As shown in Figure 5, the reject zone 28 can be implemented as a receptacle with a sloping floor leading to an exit slot, although the skilled person will appreciate that a rejected battery plate pair can be removed from the apparatus in a multitude of ways.

The operation of the apparatus 10 will now be described. The delivery conveyor system delivers battery plate pairs sequentially by dropping them onto the first battery plate holding stage 12 with its moveable elements 12a, 12b in their first position. Soon after receiving a battery plate pair, the moveable elements 12a, 12b are flipped from the first position to the second position. Rotation of the moveable elements 12a, 12b to the second position causes the battery plate pair to fall under gravity onto the upper surfaces 14c of the second holding stage 14. In the embodiment shown in the Figures, the moveable element 12a is rotated clockwise by 90 degrees and the moveable element 12b is rotated anticlockwise by 90 degrees to cause the battery plate pair to drop. It is advantageous that the moveable elements 12a, 12b are each provided as a cross arrangement having four equally radially spaced ledges with adjacent ledges being radially spaced by 90 degrees. This has the advantage that rotation of a moveable element by 90 degrees to cause a battery plate pair to drop automatically places another ledge of the moveable element in the first position to receive a fresh battery plate pair. As a result, each moveable element is rotated in one direction only. Alternatively, fewer ledges might be provided. It is possible for a moveable element 12a, 12b to have a single ledge or like platform element. In this case, it may be preferable to move the moveable element from the first position to the second position and then to move the moveable element back to its first position, i.e. to flip the moveable element between positions. The second holding stage 14 is in its first position. This process of receiving a battery plate pair onto the first holding stage 12 and dropping it onto the second holding stage 14 is repeated to build up a stack of battery plate pairs on the second holding stage 14. When the stack is completed by reaching a desired number of battery plate pairs, an unloading process is triggered. The number of battery plate pairs in the stack can be determined by any suitable means, such as by a sensor or camera 20 positioned overhead the second holding stage 14. The completed stack can comprise any desired number of battery plate pairs, but typically stacks of 6, 7 or 8 battery plate pairs are provided.

When the unloading process is triggered, the lift mechanism lowers the second holding stage 14 from the first position to the second position which allows the stack of battery plates to be lowered on to the removal conveyor system 16 and then removed from the apparatus for further processing. After transferring the stack of battery plates on to the removal conveyor system 16 (and, optionally, continuing to travel downwards for a period of time), the second holding stage 14 is lifted upwards to return it to its first position. While the second holding stage 14 is being moved between the first and second positions during the unloading process, the plurality of moveable elements 22a, 22b, 22c, 22d of the third battery plate holding stage 22 are moved from the first, retracted position to the second, extended position in which the elements form a stage to support a battery plate pair 20 received from the first holding stage 12. The third battery plate holding stage 22 can receive a number of battery plate pairs during the unloading process. As a result, the first holding stage 12 can continue to drop battery plate pairs at an unaltered and relatively high frequency. Advantageously, the third battery plate holding stage 22 is lowered, either continuously or in a series of steps, so that each new battery plate pair received by it undergoes the same or substantially the same drop. The second holding stage 14 continues to move upwards towards its first position so that the stage 14a, 14b of the second holding stage 14 engages the accumulated battery plate pairs thereby transferring the accumulated battery plate pairs to the second battery plate holding stage 14. The stage of the second holding stage is disposed inwardly of the moveable elements of the third holding stage and it is possible for it to be disposed sufficiently inwardly that the second holding stage can move upwards towards its first position without contacting the moveable elements of the third holding stage. Additionally or alternatively, the second and third holding stages are configured with the moveable elements of the third holding stage aligned with the downwardly depending grooves 14d of the second holding stage so that the second holding stage can move upwards towards its first position without contacting the moveable elements of the third holding stage.

The moveable elements 22a, 22b, 22c, 22d are then retracted to the first position. If a defective battery plate pair is detected, the reject mechanism is operated in the way described above.

Various modifications and variations will be apparent to the skilled reader. For example, the moveable portions of the holding stages can be embodied in numerous ways. Different actuating motions, which might be linear or circular, can be envisaged in order to move the moveable portions between different operating positions. However, the embodiment described in relation to the Figures has been demonstrated to provide excellent and reliable results at high battery plate processing speeds.

## Claims

1. An apparatus for stacking battery plates comprising:
a first battery plate holding stage;
a delivery conveyor system for delivering battery plates sequentially to the first battery plate holding stage;
a second battery plate holding stage disposed beneath the first battery plate holding stage; and
a removal conveyor system for removing stacks of battery plates from the apparatus;
in which:
the first battery plate holding stage comprises a plurality of moveable elements which are moveable between a first position in which the elements form a stage to support a battery plate delivered by the delivery conveyor system to a second position which allows the battery plate to fall under gravity onto the second holding stage; and
the second holding stage comprises a stage for holding a stack of battery plates received from the first holding stage; wherein the second holding stage is moveable between a first position in which battery plates are received from the first holding stage and a second position which allows the stack of battery plates to be removed by the removal conveyor system.

2. An apparatus according to claim 1, in which the elements of the first holding stage are rotated between the first and second positions.

3. An apparatus according to claim 1 or claim 2, in which the elements of the first holding stage comprise a pair of spaced apart, opposed ledges.

4. An apparatus according to any one of claims 1 to 3, in which the stage of the second holding stage comprises a pair of spaced apart, opposed wall structures.

5. An apparatus according to any one of claims 1 to 4, further comprising a third battery plate holding stage disposed beneath the first battery plate holding stage and comprising a plurality of moveable elements which are moveable between a first, retracted position and a second, extended position in which the elements form a stage to support a battery plate received from the first holding stage; in which the movement of the second and third holding stages is coordinated so that the elements of the third battery plate holding stage are in the second, extended position when the second holding stage is being moved between the first and second positions.

6. An apparatus according to claim 5, in which the elements of the third holding stage comprise a first set of one or more protruding elements and an opposed second set of one or more protruding elements.

7. An apparatus according to any previous claim, further comprising a reject mechanism for rejecting a defective battery plate, wherein the reject mechanism comprises: an intercept holding stage which comprises a plurality of moveable elements which are moveable between a first, retracted position which allows battery plates to fall under gravity onto the second holding stage and a second, extended position in which the elements form a stage to intercept a battery plate falling from the first holding stage that has been identified as a reject; and a removal element which ejects the rejected battery plate from the intercept holding stage to a reject zone.

8. An apparatus according to claim 5, in which the removal element is a reciprocable member that can be extended from a rest position to eject a rejected battery plate and retracted back to the rest position.

9. An apparatus according to claim 5 or claim 6, in which the elements of the intercept holding stage comprise a pair of spaced apart, opposed bars.

10. An apparatus according to any previous claim, in which the second holding stage comprises a lift mechanism which moves the second holding stage between the first and second positions, wherein the first position is an upper position underneath the first holding stage and the second position is a lower position aligned with the removal conveyor system.

11. An apparatus according to any previous claim, further comprising a plurality of actuators for causing the movement of the moveable elements and the second holding stage, and or .
further comprising a controller configured to control the operation of the apparatus including the movement of the moveable elements and the second holding stage.

12. A method for stacking battery plates comprising the steps of:
- providing an apparatus according to any preceding claim;
- delivering a battery plate to a first battery plate holding stage using a delivery conveyor system, the first holding stage comprising a plurality of moveable elements which are in a first position wherein the elements form a stage which supports the battery plate;
- moving the moveable elements of the first holding stage to a second position which allows the battery plate to fall under gravity onto a second holding stage, wherein the second holding stage is in a first position which allows battery plates to be received from the first holding stage;
- repeating the steps of delivering a battery plate and moving the moveable elements to provide a stack of battery plates on the second holding stage;
- moving the second holding stage from the first position to a second position which allows the stack of battery plates to be removed by a removal conveyor system.

13. A method according to claim 12, in which the apparatus further comprises a third battery plate holding stage disposed beneath the first battery plate holding stage and comprising a plurality of moveable elements which are moveable between a first, retracted position and a second, extended position in which the elements form a stage to support a battery plate received from the first holding stage; in which the movement of the second and third holding stages is coordinated so that the elements of the third battery plate holding stage are in the second, extended position when the second holding stage is being moved between the first and second positions.

14. A method according to claim 12 or claim 13, in which the apparatus further comprises a reject mechanism for rejecting a defective battery plate, wherein the reject mechanism comprises: an intercept holding stage which comprises a plurality of moveable elements which are moveable between a first, retracted position which allows battery plates to fall under gravity onto the second holding stage and a second, extended position; and a removal element;
in which the method comprises the further step of rejecting a defective battery plate by identifying a battery plate as a reject, moving the plurality of movable elements of the intercept holding stage to the second position wherein the elements form a stage to intercept the reject battery plate falling from the first holding stage, and using the removal element to eject the rejected battery plate from the third holding stage to a reject zone.

15. A battery manufacturing apparatus comprising an apparatus for stacking batteries as claimed in any of claims 1 to 11.
